# EUROPÄISCHE PATENTSCHRIFT

(11) **EP 0 631 154 B1**
(45) Veröffentlichungstag und Bekanntmachung des Hinweises auf die Patenterteilung: **16.06.1999**
(21) Anmeldenummer: 94106285.3
(22) Anmeldetag: 22.04.1994
(51) Int. Cl.: G01S 17/88

(54) **Verfahren zur Objektvermessung mittels intelligenter Entfernungsbildkamera**
Method for surveying objects using an intelligent distance picture sensing camera
Procédé de mesure d'objets à distance utilisant une caméra intelligente donnant des images avec distances

(30) Priorität: 21.06.1993 DE 4320485
(43) Veröffentlichungstag der Anmeldung: 28.12.1994
(73) Patentinhaber: DORNIER GmbH, 88039 Friedrichshafen (DE)
(72) Erfinder: Eibert, Max, Dr., D-88048 Friedrichshafen (DE); Hopfmüller, Harald, Dipl.-Phys., D-88677 Markdorf (DE); Katzenbeisser, Rolf, Dr.-Ing., D-88213 Ravensburg (DE); Schaefer, Christoph, Dr., D-88048 Friedrichshafen (DE)
(74) Vertreter: Landsmann, Ralf, Dipl.-Ing.

(56) Entgegenhaltungen:
- EP-A- 0 439 011
- EP-A- 0 494 700
- WO-A-93/07510
- DE-A- 2 813 787
- FR-A- 2 570 195
- US-A- 4 523 108
- SIGNAL PROCESSING. EUROPEAN JOURNAL DEVOTED TO THE METHODS AND APPLICATIONS OF SIGNAL PROCESSING, Bd.22, Nr.3, März 1991, AMSTERDAM NL Seiten 299 - 311 LUX ET AL 'Range imaging for autonomous navigation of robotic land vehicles'

## Beschreibung

Die Erfindung betrifft ein Verfahren zur Vermessung von Objekten mittels intelligenter Entfernungsbildkamera nach dem Oberbegriff des Patentanspruchs.

Bei der praktischen Vermessung realer Objekte ist zwischen kooperativer und nicht-kooperativer Szene zu unterscheiden.

Bei kooperativer Szene lassen sich Bildauswertesysteme einsetzen, die aus einzelnen Videobildern oder aus Videobildpaaren automatisch die 3d-Kontur eines Objektes berechnen. Dazu müssen jedoch bestimmte Voraussetzungen geschaffen werden: Die Objektoberfläche muß in der Regel behandelt werden, das Objekt muß in bestimmter Weise beleuchtet werden (mit einem Muster oder dergleichen), die Hintergrundhelligkeit muß angepaßt werden. Bei kooperativer Szene lassen sich auch die Funktionen der Positions- und Lagebestimmung sowie der Objektklassifikation mit derartigen Systemen realisieren. Die Robustheit und Genauigkeit hängt dabei vom Umfang der Szenenunterstützung ab.

Bei nicht-kooperativer Szene versagen die oben angegebenen Systeme oftmals. Statt dessen werden am Objekt mehr oder weniger Einzelmessungen an bestimmten Sollpunkten durchgeführt. Dies kann mechanisch (mit Koordinatenmeßmaschinen) oder berührungslos optisch (mit Triangulationsmethoden) geschehen. Um die gewünschten Sollpunkte anzupeilen, wird ein Mensch benötigt. Für eine flächendeckende Vermessung ist dieses Verfahren daher in der Regel nicht zu gebrauchen, ebensowenig für eine automatische Objektklassifikation.

In der DE 34 32 892 A1 ist ein elektrooptisches Zielgerät beschrieben. Dabei werden die mit einem elektrooptischen Sensor, z.B. einer Infrarotbildkamera, aufgenommenen Sensorbilddaten mit einer zweidimensionalen Objektschablone verglichen. Die Bildauswertung erfolgt in einer Schaltstufe aus miteinander gekoppelten Hardwarekomponenten.

In Signal Processing, European journal devoted to the methods and applications of signal processing, Band 22, Nr. 3, März 1991, Amsterdam NL, Seiten 299 - 311 ist ein Verfahren zur Objektvermessung mittels einer Entfernungsbildkamera beschrieben. Dieses Verfahren entspricht dem Oberbegriff des Anspruchs 1, wobei der in dieser Literaturstelle erwähnte Vergleich des Entfernungsbildes mit einem geometrischen Modell des Objekts nicht näher ausgeführt ist.

Aufgabe der Erfindung ist es, ein schnelles und hochgenaues Verfahren zur berührungslosen und vollautomatischen Erfassung von Objekten in nicht-kooperativer, natürlicher Umgebung; insbesondere zur Objektvermessung, Positions- und Lagebestimmung und Objektklassifikation anzugeben.

Diese Aufgabe wird erfindungsgemäss durch den Gegenstand des Patentanspruchs gelöst.

Die Vorteile der Erindung sind vor allem bei nicht-kooperativer Szene zu finden. Die Funktionen der berührungslosen Objektvermessung, der Positions- und Lagebestimmung sowie der Objektklassifikation lassen sich mit der Erfindung vollautomatisch realisieren. Dies führt zu grösserer Effizienz und weniger Fehlern als mit den herkömmlichen Methoden. Darüber hinaus lassen sich ganze Objektflächen anstelle einzelner Sollpunkte vermessen. Schließlich ist die automatische Objektklassifikation für Anwendungen des "Rechnersehens" von Bedeutung.

Die Erfindung kann auch bei kooperativer Szene vorteilhaft sein, wenn das Präparieren einer Szene zu aufwendig ist.

Die Erfindung wird nachfolgend anhand von Figuren näher erläutert.

Es zeigen:
- Fig. 1: ein Funktionsschema der Erfindung und
- Fig. 2: ein Ablaufschema eines Auswerteprogramms.

Die intelligente Kamera zur Objektvermessung besteht aus einer Entfernungsbildkamera und einem speziell programmierten Auswerterechner.

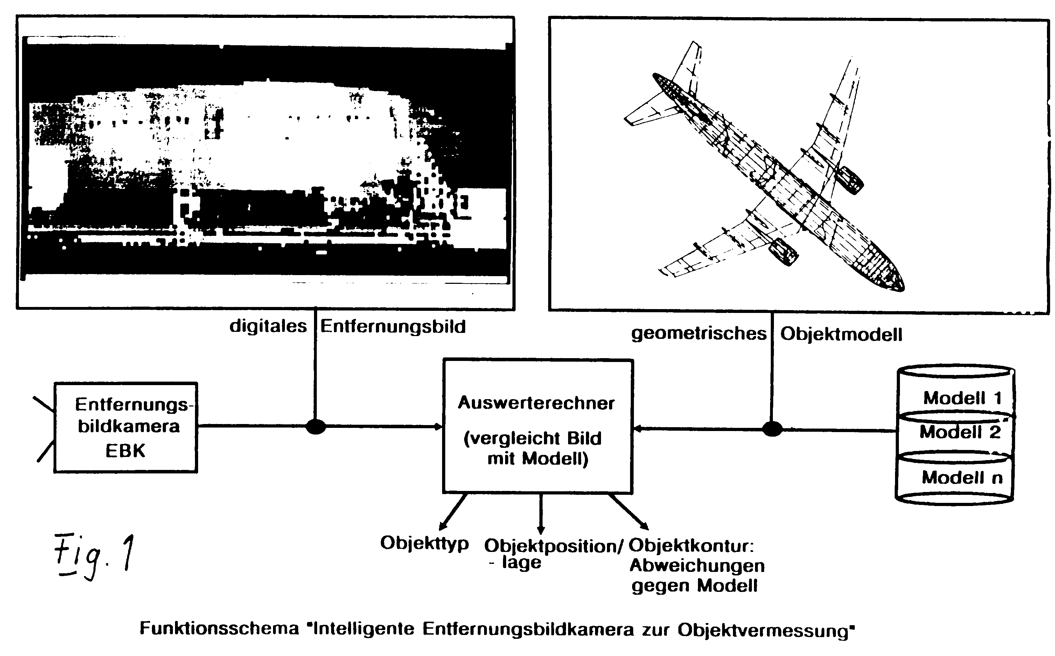

Diese Komponenten werden in den folgenden Abschnitten beschrieben. Ein Funktionsschema ist in Fig. 1 dargestellt.

### 1. ENTFERNUNGSBILDKAMERA

Als Sensor für das Objektvermessungssystem kann ein beliebiger 3d-abbildender Sensor mit hoher Bildauflösung und Absolutmeßfähigkeit eingesetzt werden. Das momentan realisierte System nutzt eine weiterentwickelte Entfernungsbildkamera der Firma Dornier. Es handelt sich dabei im wesentlichen um den abbildenden Laserradarsensor, dessen Merkmale bereits in der Patentschrift Nr. **DE 39 42 770 C2** vom 16.01.1992 ausführlich dargelegt wurden und dessen Eigenschaften hier deshalb nur stichpunktartig aufgezählt werden:
- 3d-abbildender Sensor
- Entfernungsmessung über Licht-Laufzeitmessung
- Entfernungsauflösung im cm-Bereich
- Strahlablenkung in zwei Dimensionen
- Zeilenscanner, zum Beispiel realisiert als faseroptischer Scanner, beschrieben in Patentschrift **DE 39 42 771 C1** vom 04.07.1991
- Spaltenscan, zum Beispiel realisiert durch geregelte Spiegelbewegung
- Generierung von Entfernungsbildern

Für die beschriebene Anwendung wurde dieses Gerät weiterentwickelt wie folgt, um absolut geeichte Entfernungswerte und eine höhere Bildauflösung zu erhalten.

### i) Absoluteichung der Entfernungsmessung

Eine fest in den Sensor integrierte Lichtleitfaser wird in regelmäßigen Abständen in den optischen Strahlengang eingeblendet und die Lichtlaufzeit durch den Lichtleiter mit der Sensorelektronik vermessen. Das Meßergebnis wird benutzt, um die Absolutkalibrierung der Entfernungsmeßwerte durchzuführen. Damit werden systematische Entfernungsmeßfehler, z.B. verursacht durch Temperaturempfindlichkeit elektronischer Bauteile, erkannt und kompensiert. Außerdem wird damit ein kontinuierlicher Selbsttest des Laserradas erreicht.

### ii) Erhöhung der Bildauflösung

Bei statischen Szenen kann die Genauigkeit der Entfernungsmessungen erhöht werden, indem man über mehrere Sensorbilder mittelt. Die Entfernungsbildkamera ist so konstruiert, daß bei aufeinanderfolgenden Aufnahmen derselben Szene die Scangeometrie leicht variiert wird. Die entsprechenden Sensorbilder sind also gegenseitig leicht im Winkel verschoben, so daß nach mehreren Aufnahmen eine lückenlose Abbildung der Szene erreicht wird. Die jeweilige Verschiebung wird z.B. über Winkelencoder genau vermessen. Durch diese konstruktive Maßnahme in Verbindung mit einer geeigneten Auswertung wird erreicht, daß nicht nur die Genauigkeit der Entfernungsmessung durch Aufnahme mehrerer Bilder erhöht wird, sondern auch die Bildauflösung.

### 2. AUSWERTERECHNER

### 2.1 Rechneraufbau

Der Auswerterechner ist hardwaremäßig konventionell konfiguriert als Ein- oder Multiprozessorsystem mit folgender Peripherie:
(1) Diskettenstation zur Eingabe von Programmen und Daten;
(2) Festplatte zur Speicherung von Programmen und Daten;
(3) Schnittstelle zum Sensor für den Entfernungsbildtransfer;
(4) eventuell zusätzliche anwendungsspezifische Schnittstelle zu Outputdatenübergabe.

Die erforderliche Größe des Speichermediums (2) richtet sich nach Größe und Anzahl der zu vermessenden Objekte.

Die Software des Auswerterechners besteht aus
(1) Betriebssystem;
(2) Treiberroutine für die Schnittstelle zum Entfernungsbildsensor;
(3) Auswerteprogramm mit den Funktionen: Objektvermessung, Positions- und Lagebestimmung, Objektklassifikation;
(4) eventuell Treiberroutine für die Outputschnittstelle.

Das Auswerteprogramm (3) ist speziell auf den Informationsgehalt des Entfernungsbildes ausgelegt und daher nur in Verbindung mit einer Entfernungsbildkamera funktionsfähig. Das Auswerteprogramm wird im folgenden näher beschrieben.

### 2.2 Auswerteprogramm

### 2.2.1 Übersicht

Die Hauptfunktion des Programmes besteht im Vergleich der vom Sensor erfaßten 3d-Objektgeometrie mit einem oder mehreren, im Rechner vorhandenen 3d-Geometriemodellen (CATIA o.ä.).

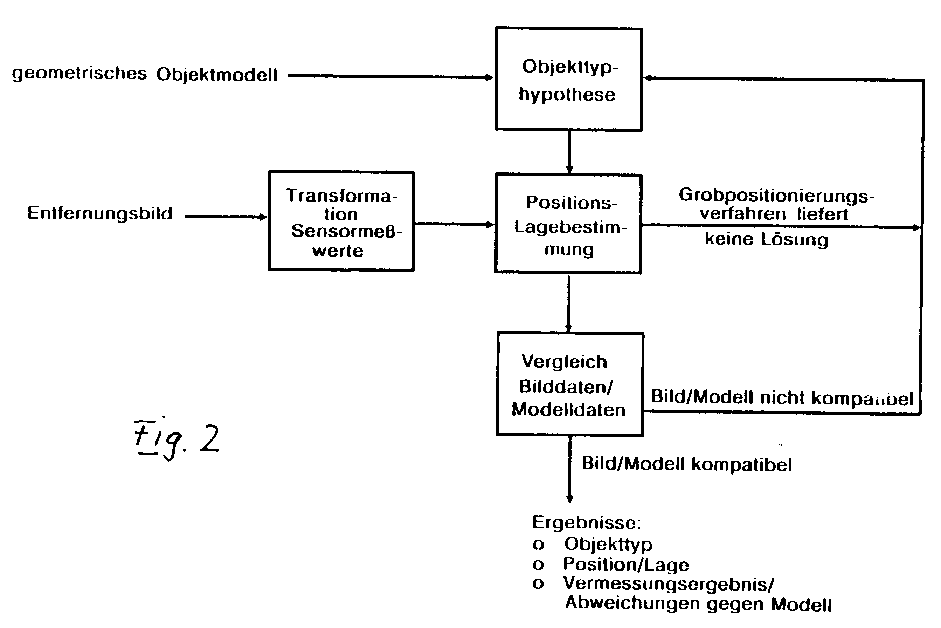

Der Prozeßablauf des Auswerteprogrammes ist in Fig. 2 schematisch dargestellt. Nach der Aufnahme eines Entfernungsbildes des zu vermessenden Objektes wird zunächst vom Programm eine Hypothese gemacht bezüglich des Objekttyps. Bei der sich anschließenden Positions- und Lagebestimmung wird das der Hypothese entsprechende Geometriemodell mit den Entfernungsbilddaten durch ein Optimierungsverfahren bestmöglich zu Übereinstimmung gebracht. Gegebenenfalls stellt das Verfahren fest, daß keine auch nur annähernd optimale Lösung zu finden ist; in diesem Fall wird die aktuelle Objekttyphypothese verworfen (s.u.). Andernfalls erlaubt die errechnete Objektposition und -lage - auf der Grundlage der aktuellen Objekttyphypotese - die Berechnung eines "Soll-Entfernungsbildes". Der Vergleich dieses Soll-Entfernungsbildes mit dem "lst-Entfernungsbild" führt auf eine der drei folgenden Alternativen:
(1) Alle Meßpunkte, die auf dem Objekt liegen, stimmen bei Soll-Bild und Ist-Bild im Rahmen der Meßgenauigkeit überein.
(2) Eine große Zahl von Meßpunkten, die auf dem Objekt liegen, stimmt bei Soll-Bild und Ist-Bild überein; bei einer kleineren Zahl geht die Abweichung über die Ungenauigkeit der Messung hinaus.
(3) Für eine große Zahl von Meßpunkten läßt sich keine Übereinstimmung zwischen Soll-Bild und Ist-Bild feststellen.

Aus diesen drei Alternativen ergeben sich folgende Feststellung und Aktionen:
(1) Die aktuelle Objekttyphypothese ist korrekt; die aktuell berechnete Position und Lage des Objektes ist korrekt; das vermessene Objekt stimmt mit dem Geometriemodell im vom Sensor erfaßten Bereich und im Rahmen der Sensormeßgenauigkeit überein. Das Programm ist beendet.
(2) Die aktuell berechnete Position und Lage des Objektes ist korrekt; die aktuelle Objekttyphypothese ist grundsätzlich korrekt, allerdings gibt es partiell Unterschiede zwischen Objektmodell und realem Objekt. Es kann entweder mit einem geringfügig anderen Geometriemodell neu gerechnet werden (sofern vorhanden), und der zugehörige Soll-/lst-Vergleich erneut durchgeführt erden; oder das Programm ist beendet, und Ort und Ausmaß der Abweichungen werden ausgegeben.
(3) Die aktuelle Objekttyphypothese ist falsch; es muß mit einer neuen Objekttyphypothese weitergerechnet werden.

Der Programmablauf vereinfacht sich, wenn zusätzliches Vorwissen vorhanden ist. Steht beispielsweise der Objekttyp von vornherein fest, entfällt dessen Variation, und das Programm liefert nur die Objektposition und -lage sowie Unterschiede zwischen realem Objekt und Modell.

Das Modul zur Positions- und Lagebestimmung ist von zentraler Bedeutung. Es muß einerseits ohne Startwert auskommen und schnell sein, da es in einer Schleife mit variablem Objekttyp aufgerufen wird. Andererseits muß es vollautomatisch ablaufen und die Datenredundanz beim Input (Entfernungsbild) gegenüber dem Output (6 Koordinaten für Position und Lage) für optimale Genauigkeit nutzen. Es wird im folgenden Abschnitt genauer beschrieben.

### 2.2.2 Positions- und Lagebestimmung

Die einzelnen Meßwerte eines Entfernungsbildes lassen sich nach einfachen Transformationsgesetzen in 3d-Vektoren überführen, die die Orte der zugehörigen Szenenpunkte im Koordinatensystem des Sensors festlegen. Eine derartige 3d-Rekonstruktion der Szene ist wegen des verwendeten Meßprinzips invariant gegen variable externe Beleuchtungsverhältnisse und variable Objektoberflächenreflektivitäten.

Um eine im Rahmen des Verfahrens auftretende Positions- und Lagehypothese des Objektes zu bewerten, muß das vorgegebene Geometriemodell des Objektes lediglich der Hypothese entsprechend in die 3d-Rekonstruktion der Szene gelegt werden; dann muß nachgeprüft werden, ob eine ausreichende Anzahl von Szenenpunkten tatsächlich auf der Objektoberfläche liegt. Mit Hilfe der sogenannten Abstandsfunktion läßt sich die Güte einer beliebigen Positions- und Lagehypothese quantifizieren: Es wird der räumliche Abstand aller Szenenpunkte von der Objektoberfläche als Funktion der betreffenden Positions- und Lagekoordinaten berechnet, und es wird über die Gesamtheit dieser Abstände (sofern sie nicht zu groß sind) gemittelt.

Bei korrekter Positions- und Lagehypothese nimmt die Abstandsfunktion den Minimalwert O an (im idealisierten Fall einer fehlerfreien Messung). Mathematisch gesprochen besteht die Positions- und Lageberechnung beim vorliegenden Auswerteverfahren in der globalen Minimierung der Abstandsfunktion (sogenannte Extremalwertaufgabe). Wir gehen im folgenden auf die Besonderheiten bei Formulierung und Lösung dieser Extremalwertaufgabe ein.

Im Bereich der Lösung kann die Abstandsfunktion als Taylorreihe zweiter Ordnung des Positions- und Lagefehlers approximiert werden. Zur Verbesserung eines guten Schätzwertes für die Lösung (sogenannter Startwert) stehen somit direkte und iterative Standardverfahren zur Verfügung, von denen das direkte der aktuellen Aufgabenstellung angepaßt wurde und als zweite Stufe des Verfahrens realisiert wurde ("Feinpositionierung"). Die Besonderheiten des Feinpositionierungsverfahrens sind in Abs. (2.2.2.2) zusammengefaßt.

Der der Feinpositionierung vorangestellte Verfahrensbestandteil "Grobpositionierung" dient zur Gewinnnung einer brauchbaren Positions- und Lagehypothese, wie sie von der Feinpositionierung als Startwert benötigt wird. Im Rahmen der Grobpositionierung lassen sich keine Annahmen über den Verlauf der Abstandsfunktion machen, die zu allgemeingültigen Lösungsverfahren wie bei der Feinpositionierung führen. Da die Behandlung solcher willkürlich verlaufender Funktionen aufwendig ist, beschränkt man sich bei der Grobpositionierung auf die Lösung der Extremalwertaufgabe in 3 Variablen, was bei vielen Anwendungen (z.B. bei Fahrzeugen auf ebener Fahrbahn, wo vertikale Positionskoordinate, Nick- und Rollwinkel der Fahrzeuge näherungsweise feststehen) zu ausreichender Genauigkeit für den Startwert der Feinpositionierung führt. Im Gegensatz zur Feinpositionierung löst das Grobpositionierungsverfahren also nur die Extremalwertaufgabe in Variablen und mit eingeschränkter Genauigkeit, benötigt dafür aber keinen Startwert. Die Besonderheiten der Grobpositionierung sind in Abs. (2.2.2.1) zusammengefaßt.

Beide Verfahren zusammengenommen lösen die oben genannte Extremalwertaufgabe (Minimierung der Abstandsfunktion) ohne Schätzwert für die Position und Lage des Objektes hochgenau und in allen sechs Freiheitsgraden; sie liegen der im Auswerterechner implementierten Software zugrund.

### 2.2.2.1 Merkmale des Grobpositionierungsverfahrens (in Stichworten)

- näherungsweise Bestimmung von horizontaler Position und vertikaler Drehlage eines Objektes; übrige drei Positions- und Lagekoordinaten werden als (näherungsweise) bekannt vorausgesetzt
- kein Startwert erforderlich
- Positions-/Lagebestimmung durch kombinatorische Korrelation von horizontaler Objektkontur in Modell und Bild
- Einschränkung der Kombinationsvielfalt durch Konsistenzprüfung
- Konsistenzprüfung durch Vergleich der paarweisen Abstände von je drei Konturpunkten im Bild und im Modell
- off-line Aufbereitung einer Datentabelle mit allen Abständen und Punktepaaren der (diskretisierten) Modellkontur zur Reduktion des Rechenaufwandes bei der Konsistenzprüfung
- Rechenzeit im Sekundenbereich
- Einzelbildauswertung

### 2.2.2.2 Merkmale des Feinpositionierungsverfahrens

- hochgenaue Bestimmung aller sechs Positions- und Lagekoordinaten des Objektes
- angenäherter Schätzwert für Position und Lage als Startwert erforderlich
- Positions-/Lagebestimmung durch Minimierung des mittleren Abstandes von Bildpunkten zur Referenzoberfläche
- Beschränkung der Referenzoberfläche Approximation der Objektoberfläche erlaubt analytische Darstellung und Minimierung der Abstandsfunktion für einen festen Satz von Bezugspunkten
- iterative Bezugspunktwahl
- Identifikation von Nebenminima der Abstandsfunktion
- Verfahren parallel auf Multiprozessorsystem implementiert
- Rechenzeit im Minutenbereich
- Auswertung gemittelter Entfernungsbilder für hohe Genauigkeit

Die Funktion der hochgenauen Positions- und Lageerkennung eines nicht speziell markierten, großen Passagierflugzeuges wurde praktisch und erfolgreich erprobt. Die intelligente Entfernungsbildkamera war dabei Bestandteil eines Waschroboters, der von den Firmen Deutsche Lufthansa und Putzmeister erprobt wird. Die Erprobung fand im Freien unter verschiedenen Wetterbedingungen, zu verschiedenen Tageszeiten (auch nachts) und bei trockener und nasser Flugzeughaut statt. Die Meßzeit lag bei ca. 1,5 Minuten, die sich anschließende on-line Auswertung zur Positions- und Lageberechnung ca. 2 Minuten.

Vorliegende, beabsichtigte, mögliche Anwendungen der Erfindung
- Fahrzeugführung bei der Positionierung eines Waschroboters für Flugzeuge
- Einmeßvorgang für die Berechnung der Waschbahnen des Waschroboters
- Arbeitsraumüberwachung während des Waschvorganges beim Waschroboter
- dto. für einen Enteisungsroboter für Flugzeuge
- Positions-, Lage- und Typerkennung für das automatische Lotsen von Flugzeugen beim Andocken
- Generierung von Catiadaten für Flugzeuge o.ä.
- Überprüfung von Abweichungen realer Flugzeuge von ihren Catiadaten
- Positions- und Lagebestimmung für die automatische Containerverladung
- Objekt- und Szenenvermessung zur 3D-Datenerfassung und Modellbildung
- Allgemeine Objektvermessung.

## Patentansprüche

1. Verfahren zur Objektvermessung mittels intelligenter Entfernungsbildkamera, mit folgenden Merkmalen:
- Aufnahme eines hochaufgelösten, digitalen Entfernungsbildes des Objektes in Echtzeit
- Verwendung eines aktiven, elektrooptischen, scannenden Sensors als Frontend des Systems
- Auswertung des Entfernungsbildes mit Algorithmen zur Objektpositions- und -lageberechnung, Objektvermessung und Objektklassifikation, die den speziellen Informationsgehalt des Entfernungsbildes nutzen und dieses mit einem geometrischen dreidimensionalen Modell des Objektes vergleichen
- on-line Auswertung auf einem Rechner, der Bestandteil des Systems ist,
**dadurch gekennzeichnet,** daß der Algorithmus zur Objektpositions- und - lageberechnung die folgende Stufen umfaßt,
- Grobpositionierung zur Gewinnung einer geeigneten Positions- und Lagehypothese, wobei näherungsweise drei der Positions- und Lagekoordinaten des Objekts bestimmt werden,
- Feinpositionierung zur hochgenauen Bestimmung aller sechs Positions- und Lagekoordinaten des Objekts, wobei das Ergebnis der Grobpositionierung als Startwert verwendet wird,
und daß zur Absoluteichung der Entfernungsmessung ein in den Sensor integrierter Lichtleiter in den optischen Strahlengang eingeblendet wird und die Lichtlaufzeit durch den Lichtleiter mit der Sensorelektronik vermessen wird.

## Claims

1. Method for surveying objects by means of an intelligent distance imaging camera, the method comprising the following features:
- taking of a high-resolution digital distance image of the object in real time,
- use of an active electro-optical scanning sensor as the front end of the system,
- evaluation of the distance image with algorithms for calculating object position and orientation, object surveying and object classification, which use the special information content of the distance image and compare it with a geometric three-dimensional model of the object,
- on-line evaluation on a computer, which is a component of the system,
**characterised in that** the algorithm for calculating object position and orientation comprises the following steps:
- coarse positioning to obtain a suitable position and orientation hypothesis, three of the position and orientation co-ordinates of the object being determined by approximation,
- fine positioning for highly accurate determination of all six position and orientation co-ordinates of the object, the result of the coarse positioning being used as a starting value,
and that for absolute calibration of the distance measurement an optical fibre integrated in the sensor is introduced into the optical ray path and the light transit time through the optical fibre is measured with the sensor electronics.

## Revendications

1. Procédé de mesure d'objet au moyen d'une caméra intelligente à image d'éloignement, possédant les caractéristiques suivantes :
- enregistrement d'une image d'éloignement numérique à haute résolution de l'objet en temps réel
- utilisation d'un capteur actif optoélectronique à balayage à l'avant du système
- analyse de l'image d'éloignement à l'aide d'algorithmes de calcul de position d'objet, de mesure d'objet et de classification d'objet qui exploitent le contenu informationnel spécifique de l'image d'éloignement et le compare avec un modèle géométrique tridimensionnel de l'objet
- analyse en ligne sur un ordinateur faisant partie du système,
caractérisé en ce que l'algorithme de calcul de position d'objet comprend les étapes suivantes :
- positionnement sommaire pour acquérir une hypothèse de position appropriée, trois des coordonnées de position de l'objet étant déterminées par approximation,
- positionnement fin pour déterminer avec une grande précision les six coordonnées de position de l'objet, le résultat du positionnement sommaire étant utilisé comme valeur de démarrage,
et en ce que, pour l'étalonnage absolu de la mesure d'éloignement, une fibre optique intégrée au capteur est introduite dans le trajet des rayons optiques et le temps de temps de passage de la lumière à travers la fibre optique est mesuré avec l'électronique du capteur.
